# EUROPÄISCHE PATENTANMELDUNG

(11) **EP 1 207 163 A2**
(43) Veröffentlichungstag der Anmeldung: **22.05.2002**
(21) Anmeldenummer: 02004369.1
(22) Anmeldetag: 17.01.1997
(51) Int. Cl.: C07F 7/08

(54) **Verfahren zur Herstellung multifunktioneller, cyclischer Organosiloxane**

(30) Priorität: 30.01.1996 DE 19603241
(62) Teilanmeldung aus: 97100727.3
(71) Anmelder: BAYER AG, 51368 Leverkusen (DE)
(72) Erfinder: Jentsch, Jörg-Dietrich, 47799 Krefeld (DE); Mager, Michael, Dr., 51375 Leverkusen (DE); Mechtel, Markus, Dr., 50937 Köln (DE)

(57) **Zusammenfassung**

Die vorliegende Erfindung betrifft ein neues Verfahren zur Herstellung multifunktioneller cyclischer Organosiloxane.

## Beschreibung

Die vorliegende Erfindung betrifft ein neues Verfahren zur Herstellung multifunktioneller, cyclischer Organosiloxane.

Lineare multifunktionelle Silane und Siloxane werden, wie aus DE-A-4022661 ersichtlich, als Vernetzer in kondensationsvernetzenden Organopolysiloxanmassen, wie z.B. bei Raumtemperatur und in Gegenwart von Feuchtigkeit zu Elastomeren aushärtenden 1- und 2- Komponenten Siliconpasten, eingesetzt. Zudem finden diese Verwendung bei der Herstellung von Oberflächenbeschichtungsmitteln sowie zu deren Modifizierung.

In US-A 5359109 werden cyclische Siloxane beschrieben, die u.a. zur Oberflächenbeschichtung von Beton und als Lackadditiv in Farben für Metalloberflächen geeignet sind. Diese Siloxane weisen jedoch nur eine hydrolysierbare Gruppe pro Molekül auf und sind daher als Netzwerkbildner ungeeignet.

Aus WO 94/06807 sind bereits trialkoxyfunktionelle Cyclosiloxane bekannt. Diese Verbindungen sind jedoch nur begrenzt lagerstabil, da in Gegenwart von Feuchtigkeit langsam Hydrolyse der Alkoxygruppen und Kondensation zu polymeren Siloxanen erfolgt. Die Herstellung über die literaturbekannte Hydrosilylierung von Trialkoxysilanen an Alkenylsilane in Gegenwart von homogenen Katalysatoren liefert z.T. erhebliche Mengen von Nebenprodukten in Folge einer unvollständigen Umsetzung. Diese Nebenprodukte sind nur in aufwendigen Verfahren abtrennbar, da das Hauptprodukt nicht durch Destillation, Kristallisation oder andere gängige Verfahren zu reinigen ist. Zudem weisen homogen katalysierte Hydrosilylierungen oft den Nachteil auf, dass die Reaktionswärme nur schwer zu kontrollieren ist. Dies wird vor allem dann deutlich, wenn Reaktionen vom Labormaßstab in den technischen Maßstab übertragen werden sollen.

So sind z.B. die Umsetzungen von Tetravinylsilan mit HSiCl₃, HSiCl₂Me oder HSiClMe₂, bei welchen jeweils vier Si-C-Bindungen geknüpft werden, allesamt stark exotherm. Wie in Macromolecules 1993, 26, 963-968 beschrieben, ist es oft schon bei Ansätzen von einigen Gramm notwendig, das Reaktionsgefäß mit einem Kältebad abzukühlen, da ein Rückflusskühler allein das niedrigsiedende Chlorsilan nicht mehr zurückkondensieren kann.

Neben der starken Wärmeentwicklung ist es darüber hinaus sehr schwierig abzuschätzen, wann genau die Reaktion einsetzt. Wurden alle Edukte gründlichst gereinigt und der Katalysator unmittelbar vor der Reaktion frisch angesetzt, so kommt die Reaktion zuweilen ohne zusätzliches Erwärmen selbst in Gang. In den meisten Fällen jedoch bedarf es der Zufuhr von Wärme. Beim Einsetzen der Reaktion ist die vorgewärmte Mischung dann umso schwerer etwa durch Kühlen unter Kontrolle zu bringen. Sowohl Spuren von Verunreinigungen in den Edukten (Wasser, HCl), als auch eine veränderte Katalysatoraktivität könnten hierfür als Ursache angesehen werden.

In Adv. Organometallic Chem. 1979, 17, 407-409 ist dieses Reaktionsverhalten als "Induction Period" beschrieben, und wird auf die Bildung der eigentlich katalytisch aktiven Species während dieser "Induktionsperiode" zurückgeführt.

Solch ein wenig vorhersehbarer Reaktionsverlauf ist für eine technische Durchführung ungünstig. Die rasche Wärmeabfuhr nach dem Einsetzen der exothermen Reaktion ist nur mit einem großen technischen Aufwand, wenn überhaupt, realisierbar.

Ein weiterer Nachteil der homogenen Katalyse besteht darin, dass der Katalysator, wenn auch nur in geringer Konzentration, im Produkt verbleibt. Neben der Tatsache, dass wertvolles Edelmetall verloren geht, resultieren aus dem Einbau meist schädigende Einflüsse auf nachfolgende Produkte.

Aufgabe der vorliegenden Erfindung war somit die Bereitstellung lagerstabliler, multifunktioneller, cyclischer Organosiloxane, die als Vernetzer in kondensationsvernetzenden Organopolysiloxanmassen, wie z.B. bei Raumtemperatur und in Gegenwart von Feuchtigkeit zu Elastomeren aushärtenden 1-und 2- Komponenten Siliconpasten, zur Herstellung von Oberflächenbeschichtungsmitteln sowie zu deren Modifizierung geeignet sind sowie die Bereitstellung eines Verfahrens, dass die oben genannten Nachteile nicht aufweist.

Überraschenderweise wurden nun cyclische multifunktionelle Organosiloxane gefunden, die diese Anforderungen erfüllen.

Gegenstand der Erfindung ist ein Verfahren zur Herstellung von multifunktionellen, cyclische Organosiloxanen der Formel (Ia), 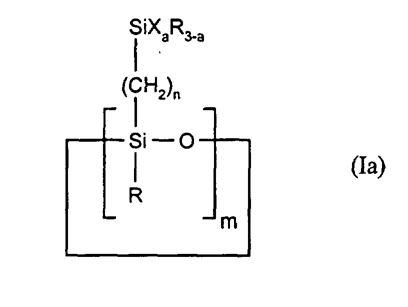 mit m = 3-6, vorzugsweise 3-4, a = 1-3, n = 2-10, vorzugsweise 2-5, besonders bevorzugt 2, R= C₁-C₈-Alkyl und/oder C₆-C₁₄-Aryl, vorzugsweise C₁-C₂-Alkyl, wobei a, n und R innerhalb des Moleküls gleich oder ungleich, bevorzugt gleich, sein können und wobei die weiteren Reste die folgende Bedeutung haben:
- A) für X =: Halogen, d.h. F,Cl,Br und I, OR', bevorzugt Cl, OR' und R' im folgenden die Bedeutung von C₁-C₈-Alkyl, vorzugsweise C₁-C₂-Alkyl hat,
dadurch gekennzeichnet, dass cyclische Organosiloxane der Formel (II) 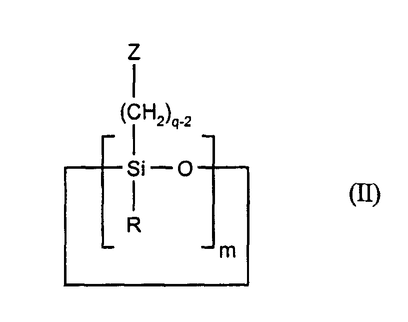 mit m = 3-6, vorzugsweise 3-4, R = C₁-C₈-Alkyl und/oder C₆-C₁₄-Aryl, vorzugsweise C₁-C₂-Alkyl, wobei R innerhalb des Moleküls gleich oder ungleich, bevorzugt gleich, sein kann und wobei die weiteren Reste die folgende Bedeutung haben:
- A) Z =: C₂H₃ und q = 2-10, vorzugsweise 2-5, besonders bevorzugt 2,
oder
mit Hydridosilanen der Formel (III)

HSiT_{f}R_{3-f} (III)

mit f = 1-3, T = Halogen, OR und R = C₁-C₈-Alkyl und/oder C₆-C₁₄-Aryl, vorzugsweise C₁-C₂-Alkyl,
in Gegenwart von heterogenen Katalysatoren umgesetzt werden.

Als cyclisches Organosiloxan werden dabei vorzugsweise Cyclo(tetra(methylvinylsiloxan), d.h. m = 4, q = 2, Z = C₂H₃ und R = Methyl, und als Hydridosilane HSiCl₃, HSiCl₂Me oder HSiClMe₂ eingesetzt.

Durch die in den erfindungsgemäßen Verfahren eingesetzten heterogenen Katalysatoren lässt sich der Reaktionsverlauf der Hydrosilylierung und auch die Wärmeentwicklung zuverlässig über den Katalysatorgehalt steuern. Eine verminderte Katalysatorkonzentration führt unmittelbar zu einer verringerten Wärmeentwicklung. Damit ist eine einfache großtechnische Realisierung des Verfahrens möglich.

Zudem erübrigt sich durch den Einsatz des erfindungsgemäßen Katalysators häufig die Vorreinigung der Edukte.

Ein weiterer Vorteil der in dem erfindungsgemäßen Verfahren eingesetzten heterogenen Katalysatoren bei einer technischen Durchführung ist, dass die Hydrosilylierung gegebenenfalls in kontinuierlichem Betrieb geführt werden kann, was die Raum-Zeit-Ausbeute erheblich steigert.

Im kontinuierlichen und diskontinuierlichen Betrieb ist die Abtrennung des geträgerten Katalysators, z.B. durch Filtration, problemlos möglich. Dieser kann nach Abtrennung im diskontinuierlichen Betrieb erneut eingesetzt werden.

Sowohl im kontinuierlichen als auch im diskontinuierlichen Betrieb erhält man Produkte, die frei von Katalysatorresten sind.

Zudem können die geträgerten Katalysatoren, im Gegensatz zu den nach dem Stand der Technik bekannten homogenen Katalysatoren, wie z.B. Hexachloroplatinsäure in Isopropanol, ohne Aktivitätsverlust und ohne spezielle Maßnahmen gelagert werden.

Gegenstand der Erfindung ist zudem ein Verfahren zur Herstellung multifunktionellen cyclischen Organosiloxanen der Formel (Ib), 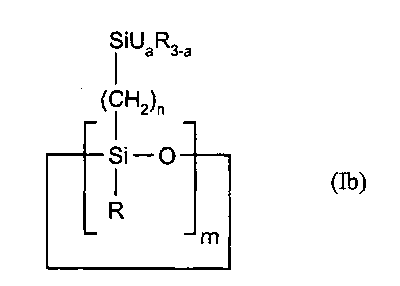 mit m = 3-6, vorzugsweise 3-4, a = 1-3, n = 2-10, vorzugsweise 2-5, besonders bevorzugt 2, R = C₁-C₈-Alkyl und/oder C₆-C₁₄-Aryl, vorzugsweise C₁-C₂-Alkyl, wobei a, n und R innerhalb des Moleküls gleich oder ungleich, bevorzugt gleich, sein können und wobei die weiteren Reste die folgende Bedeutung haben:
- A) für U =: OR' mit R'= C₁-C₈-Alkyl, vorzugsweise Methyl, Ethyl,
dadurch gekennzeichnet, daß cyclische Organosiloxane der Formel (II) 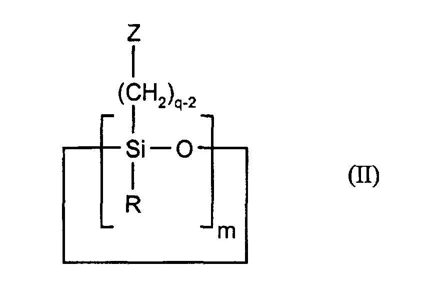 mit m = 3-6, vorzugsweise 3-4, R = C₁-C₈-Alkyl und/oder C₆-C₁₄-Aryl, vorzugsweise C₁-C₂-Alkyl, wobei R innerhalb des Moleküls gleich oder ungleich, bevorzugt gleich, sein kann und wobei die weiteren Reste die folgende Bedeutung haben:
- A) Z =: C₂H₃, q =2-10, vorzugsweise 2-5, besonders bevorzugt 2
mit Hydridosilanen der Formel (III)

HSiT_{f}R_{3-f} (III)

mit f=1-3, T=Halogen,
in Gegenwart von heterogenen Katalysatoren umgesetzt und anschließend mit einem Alkohol umgesetzt werden.

Der heterogene Katalysator besteht vorzugsweise aus Platin oder einer Platinverbindung, welche(s) auf die verschiedensten Trägermaterialien aufgebracht ist. Als Trägermaterialien seien Stoffe, besierend auf Kohle oder Metalloxiden bzw. Metalloxidgemischen beispielhaft genannt. Die Tägermaterialien können synthetischen oder natürlichen Ursprungs sein, d.h. z.B. aus Tonmineralien, Bimsstein, Kaolin, Bleicherden, Bauxite, Bentonite, Kieselgur, Asbest oder Zeolith bestehen. In einer bevorzugten Ausführungsform der Erfindung wird der katalytisch aktive Bestandteil auf einem kohlehaltigen Träger, wie z.B. Aktivkohle, Ruß, Graphit oder Koks aufgebracht, eingesetzt. Besonders bevorzugt dabei ist Aktivkohle.

Der geträgerte Katalysator kann sowohl pulverförmig, als auch stückig, z.B. als Kugeln, Zylinder, Stäbchen, Hohlzylinder oder Ringe, eingesetzt werden.

Der in dem erfindungsgemäßen Verfahren eingesetzte Katalysator wird bevorzugt auf einen geeigneten Träger aufgebracht. Seine Reaktivkomponente ist im reaktionsbereiten Zustand vorzugsweise ein Platin-Halogenid oder eine Platin-Halogenid enthaltende Komplexverbindung, die außerdem beispielsweise Olefine, Amine, Phosphine, Nitrile, Kohlenmonoxid oder Wasser enthalten kann, wie z.B. A₂PtCl₆, wobei A beispielsweise für H, Li, Na, K, NH₄, Rb, Cs, NR₄ mit R: organischer Rest C₆- bis C₁₀-Aryl-, C₇- bis C₁₂-Aralkyl- und/oder C₁- bis C₂₀-Alkyl-Rest, und Hal für ein Halogen, wie beispielsweise F, Cl, Br, I steht. Solche Halogen enthaltenden Platin-Komplexverbindungen sind grundsätzlich bekannt.

In einer bevorzugten Ausführungsform der Erfindung wird der in dem erfindungsgemäßen Verfahren eingesetzte Katalysator in situ erzeugt. Dafür wird vorzugsweise das Platin-Halogenid bzw. die das Platin-Halogenid enthaltende Komplexverbindung während der Präparation aus einer geeigneten halogenfreien Platinmetall-Verbindung und einer Halogenid- enthaltenden Verbindung auf dem Träger in situ hergestellt. Als halogenfreie Platinmetall-Verbindungen kommen z.B. Platinnitrat, -oxid, -hydroxid, -acetylacetonat und andere dem Fachmann geläufige in Frage. Als Halogenid enthaltende Verbindungen kommen halogenhaltige Salze und Komplexverbindungen der Elemente der ersten bis dritten Hauptgruppe und der ersten bis achten Nebengruppe des Periodensystems der Elemente (Mendelejew) sowie der Seltenerdmetalle (Atomnummern 58-71) in Frage. Beispiele sind NaBr, NaCl, MgBr₂, AlCl₃, NaPF₆, MnCl₂, CoBr₂, CeCl₃, Sml₂, CuCl₂, Na₂ZnCl₄, TiCl₄.

Die Menge des Platin-Halogenids oder der des Platin-Halogenids enthaltende Komplexverbindung im reaktionsbereiten Zustand beträgt bevorzugt 0,01 bis 15 Gew.-%, besonders bevorzugt 0,05 bis 10 Gew.-%, gerechnet als Platinmetall und bezogen auf das Gesamtgewicht des Katalysators.

Geeignete Lösungsmittel für die Herstellung von erfindungsgemäßen Träger-Katalysatoren sind z.B. Wasser, aliphatische Kohlenwasserstoffe, wie Pentan, n-Hexan, Cyclohexan usw., aliphatische halogenierte Kohlenwasserstoffe, wie Dichlormethan, Trichlormethan, usw., aromatische Kohlenwasserstoffe, wie Benzol, Toluol, Xylol usw., halogenierte aromatische Kohlenwasserstoffe, wie Chlorbenzol, Dichlorbenzol, usw., primäre, sekundäre oder tertiäre Alkohole, wie Methanol, Ethanol, n-Propanol, iso-Propanol, n-Butanol, iso-Butanol, t-Butanol, Cumylalkohol, iso-Amylalkohol, Diethylenglykol, usw., Ketone, wie Aceton, 2-Butanon, Methylisobutylketon, Acetylaceton usw., Ether, wie Diethylether, Diisopropylether, Methyl-t-butylether, Dioxan, Tetrahydrofuran, usw., Ester, wie Methylacetat, Ethylacetat, usw., Nitrile, wie Acetonitril, Benzonitril, usw., Carbonate, wie Dimethylcarbonat, Diethylcarbonat, Diphenylcarbonat, usw., Dimethylacetamid, N-Methylpyrrolidinon und Tetramethylharnstoff genannt. Selbstverständlich können auch Mischungen solcher Lösungsmittel eingesetzt werden.

Die Herstellung eines erfindungsgemäß einzusetzenden Katalysators erfolgt nach Methoden, die dem Fachmann grundsätzlich bekannt sind. So können Platin-haltige Lösungen und die genannten halogenidhaltigen Verbindungen durch Tränken, Adsorption, Tauchen, Sprühen, Imprägnieren und Ionenaustausch auf den erfindungsgemäß einzusetzenden Katalysatorträger gebracht werden. Es ist weiterhin möglich, Platin und die genannten halogenidhaltigen Verbindungen mit einer Base auf dem Träger zu fixieren. Als Base kommen z.B. NaOH, Li₂CO₃ und Kaliumphenolat in Frage. Platin und die halogenidhaltige Verbindung können sowohl in beliebiger Reihenfolge nacheinander als auch gleichzeitig auf den Träger gebracht werden.

Im Falle der Aufbringung des Platins durch Tränkung mit einer platinhaltigen Lösung hängt die Dauer der Tränkung geringfügig von der verwendeten Platinverbindung, der Form und Porosität des verwendeten Trägers und vom Lösungsmittel ab. Sie beträgt im allgemeinen wenige Minuten bis einige Stunden, vorzugsweise 0,01 bis 30 h, besonders bevorzugt 0,05 bis 20 h, ganz besonders bevorzugt 0,1 bis 15 h.

Während der Tränkung kann die Mischung gerührt werden. Es kann aber auch vorteilhaft sein, die Mischung stehen zu lassen oder zu schütteln, damit gegebenenfalls verwendete Formkörper nicht durch einen Rührer beschädigt werden.

Nach der Tränkung kann der Träger-Katalysator z.B. durch Filtrieren, Sedimentieren oder Zentrifugieren abgetrennt werden. Überschüssiges Lösungsmittel kann dabei z.B. durch Abdestillieren abgetrennt werden.

Nach der Tränkung werden die so erhaltenen Träger-Katalysatoren vorzugsweise getrocknet. Dies kann an der Luft, im Vakuum oder im Gasstrom geschehen. Bevorzugte Gase für die Trocknung des Träger-Katalysators im Gasstrom sind z.B. Stickstoff, Sauerstoff, Kohlendioxid oder Edelgase sowie beliebige Mischungen der genannten Gase, bevorzugt z.B. Luft. Die Trocknung erfolgt bevorzugt bei 20 bis 200°C, besonders bevorzugt bei 40 bis 180°C, ganz besonders bevorzugt bei 60 bis 150°C.

Die Trockenzeit hängt z.B. von der Porosität des verwendeten Trägers und vom verwendeten Lösungsmittel ab. Sie beträgt vorzugsweise 0,5 bis 50 h, besonders bevorzugt 1 bis 40 h, ganz besonders bevorzugt 1 bis 30 h.

Nach der Trocknung können die getrockneten Träger-Katalysatoren calziniert werden. Dies kann an der Luft, im Vakuum oder im Gasstrom geschehen. Bevorzugte Gase für die Calzinierung des Träger-Katalysators im Gasstrom sind z.B. Stickstoff, Sauerstoff, Kohlendioxid oder Edelgase sowie beliebige Mischungen der genannten Gase, besonders bevorzugt z.B. Luft. Die Calzinierung erfolgt vorzugsweise bei 100 bis 800°C, besonders bevorzugt bei 100 bis 700°C, ganz besonders bevorzugt bei 100 bis 600°C.

Die Calzinierungszeit beträgt vorzugsweise 0,5 bis 50 h, besonders bevorzugt 1 bis 40 h, ganz besonders bevorzugt 1 bis 30 h.

Die Träger-Katalysatoren können als Pulver oder Formkörper eingesetzt werden und aus der Reaktionsmischung z.B. durch Filtration, Sedimentation oder Zentrifugieren abgetrennt werden.

Die Verbindungen der Formel (IIA) sind beispielsweise durch gängige Hydrolyse und anschließende Fraktionierprozesse von Methylvinyldichlorsilan erhältlich. Die Verbindungen der Formel (IIB) können, wie z.B. in Organometallics 1994, 13, 2682 beschrieben, hergestellt werden, in dem man Verbindungen der Formel (IIA) mit Hydridosilanen, wie z.B. HSiCl₃, HSiCl₂Me oder HSiClMe₂ zur Reaktion bringt und die erhaltenen Verbindungen dann weiter mit z.B. Alkenylmagnesiumhalogeniden in einer Grignard-Reaktion reagieren lässt. In entsprechender Weise erhält man Verbindungen der Formel (IIC) aus (IIB).

Gegenstand der Erfindung ist zudem die Verwendung der erfindungsgemäßen multifunktionellen, cyclischen Organosiloxane als Vernetzer in kondensationsvernetzenden Organopolysiloxanmassen und zur Herstellung oder Modifizierung von Oberflächenbeschichtungsmitteln.

Die folgendenen Beispiele verdeutlichen die Erfindung, ohne sie jedoch auf diese einzuschränken.

### Ausführungsbeispiele:

### Vorbemerkung:

Abgesehen von der Präparation der Katalysatoren wurden alle Reaktionen in Reaktionsapparaturen, bestehend aus einem Mehrhalskolben mit Gaseinleitung, Intensivkühler mit Blasenzähler und mechanischem Rührer unter Stickstoffatmosphäre oder unter Vakuum durchgeführt. Alle verwendeten Lösungsmittel wurden, wenn nicht anders beschrieben, nach den üblichen Labormethoden vor Gebrauch getrocknet und unter Stickstoff destilliert eingesetzt. Käufliche Edukte, wie Chlordimethylsilan und Cyclo(tetra(methylvinylsiloxan)), wurden ohne weitere Reinigung eingesetzt.

Die ¹H-NMR-Spektren wurden auf einem AMX 500 der Firma Bruker angefertigt.

### Beispiel 1:

### Belegung von pulverförmiger Aktivkohle mit H₂PtCl₆ (Kat I)

49,5 g Aktivkohle Norit CN 1 (spezifische Oberfläche 1400 m²/g, wobei 10-20 % der Partikel eine Größe von 75 µm aufweisen) wurden in 300 ml bidestilliertem Wasser aufgeschlämmt und mit 200 ml einer wässrigen H₂PtCl₆-Lösung, die 0,5 g Pt - gerechnet als Metall - enthielt, versetzt. Man rührte 10 Minuten nach und saugte den Katalyator auf einer Filternutsche ab. Das wasserfeuchte Rohprodukt (153 g) wurde bei 0,1 Pa und 110°C getrocknet und unter Argon gelagert. Der Katalysator Kat I enthielt 1 % Pt.

### Beispiel 2:

### Belegung von stückiger Aktivkohle mit H₂PtCl₆ (Kat II)

49,5 g (= 114,6 ml) Aktivkohle-Extrudate Norit ROX 0,8 (spezifische Oberfläche 1 000 m²/g, durchschnittliche Partikelgröße 0,8 mm) wurden mit 33,9 ml einer wässrigen H₂PtCl₆-Lösung, die 0,5 g Pt - gerechnet als Metall - enthielt, getränkt. Das Rohprodukt wurde zunächst bei 110°C im Stickstoffstrom getrocknet, anschließend bei 0,1 Pa und 110°C getrocknet und unter Argon gelagert. Der Katalysator enthielt 1 % Pt.

### Beispiel 3:

### Belegung von pulverförmigen SiO₂ mit H₂PtCl₆ (Kat III)

49,5 g SiO₂ mit einer spezifischen Oberfläche von 180 m²/g (erhältlich bei der Firma Merck Deutschland unter dem Namen Merck 657) wurden mit 132 ml einer wässrigen H₂PtCl₆-Lösung, die 0,5 g Pt - gerechnet als Metall - enthielt, angeteigt. Das wasserfeuchte Rohprodukt wird zunächst bei 110°C im Trockenschrank getrocknet, anschließend bei 0,1 Pa und 110°C getrocknet und unter Argon gelagert. Der Katalysator enthielt 1 % Pt.

### Beispiel 4:

### Belegung von pulverförmigen Al₂O₃ mit H₂PtCl₆ (Kat IV)

49,5 g γ-Al₂O₃ mit einer spezifischen Oberfläche von 250 m²/g (erhältlich bei der Firma Rhone-Poulenc Frankreich unter der Bezeichnung SPH 509) wurden mit 40 ml einer wässrigen H₂PtCl₆-Lösung, die 0,5 g Pt- gerechnet als Metall - enthielt, angeteigt. Das wasserfeuchte Rohprodukt wurde zunächst bei 100°C im Trockenschrank getrocknet, anschließend bei 0,1 Pa und 110°C getrocknet und unter Argon gelagert. Der Katalysator enthielt 1 % Pt.

### Beispiel 5:

### Belegung von pulverförmigen TiO₂ mit H₂PtCl₆ (Kat V)

49,5 g TiO₂ mit einer spezifischen Oberfläche von 330 m²/g (erhältlich bei der Firma Bayer AG, Deutschland) wurden mit 70 ml einer wässrigen H₂PtCl₆-Lösung, die 0,5 g Pt - gerechnet als Metall - enthielt, angeteigt. Das wasserfeuchte Rohprodukt wurde zunächst bei 110°C im Trockenschrank getrocknet, anschließend bei 0,1 Pa und 110°C getrocknet und unter Argon gelagert. Der Katalysator enthielt 1 % Pt.

### Beispiel 6:

### Synthese von cyclo-{SiO(CH₃)[(CH₂)₂SiCl(CH₃)₂]}₄

Zu 50 g (145,2 mmol) cyclo-{SiO(CH₃)(C₂H₃)}₄ in 120 ml THF wurden unter Rühren 69 g (726,7 mmol) Chlordimethylsilan und 800 mg des Katalysator Kat I gegeben. Man erwärmte die Reaktionsmischung auf 50°C, wobei auch nach 2 h bei dieser Temperatur keine Wärmeentwicklung beobachtet wurde. Nach weiteren 20 h bei 55 bis 60°C kühlte man auf Raumtemperatur ab und filtrierte den Katalysator über eine Umkehrfritte ab. Das klare, farblose Filtrat wurde im Vakuum von flüchtigen Bestandteilen befreit und man erhielt das Produkt als farbloses Öl.
C₂₀H₅₂Cl₄Si₈O₄
M=723,127 g/mol
¹H-NMR: (CDCl₃)
δ=0,09 ppm (s, 3H, O₂Si(CH₃)(CH₂)₂Si(CH₃)₂Cl); 0,39 ppm (s, 6H, Si(CH₃)₂Cl); 0,51 ppm und 0,74 ppm (m, jeweils 2H, Si(CH₂)₂Si).

### Beispiel 7:

### Synthese von cyclo-{SiO(CH₃)[(CH₂)₂Si(OH)(CH₃)₂)}₄

Zu einer Mischung bestehend aus 87,4ml (63,6g; 628,3mmol) Triethylamin, 12,1ml (12,1g; 672,2mmol) Wasser und 2850ml tert. Butylmethylether tropfte man innerhalb einer Stunde 105g (145,2 mmol) cyclo-{SiO(CH₃)[(CH₂)₂SiCl(CH₃)₂]}₄ in 100ml Diethylether. Nach Ende der Zugabe rührt man noch eine Stunde und filtrierte dann den Niederschlag aus Triethylaminhydrochlorid ab. Nun entfernte man die flüchtigen Bestandteile im Vakuum mittels Rotationsverdampfer, nahm den öligen Rückstand in wenig THF auf und filtriert über Kieselgel. Nach dem erneuten Entfernen aller flüchtigen Bestandteile im Vakuum erhielt man das Produkt als viskoses Öl.
Ausbeute: 69,5g entsprechend 74% d.Th. C₂₀H₅₆Si₈O₈
M=649,346 g/mol
¹H-NMR: (DMSO-d₆)
δ=0,06 ppm (s, 9H, SiCH₃); 0,42 ppm (m, 4H, SiCH₂); 5,27 ppm (s, 1H, SiOH).

### Beispiel 8:

### Umsetzung von cyclo-{OSiMe[(CH₂)₂SiMe₂Cl]}₄ mit Ethanol

Zu 72 g (0,1 mol) der in Beispiel 6 hergestellten Verbindung cyclo-{OSiMe[(CH₂)₂SiMe₂Cl]}₄ wurden unter Rühren langsam 36 g Ethanol zudosiert. Nach beendeter Zugabe wurde eine Stunde bei einem Druck von 250 mbar unter Rückfluss gekocht. Anschließend wurde die Probe bis 100°C/250mbar ausgeheizt und neutralisiert. Man rührte eine Stunde bei Raumtemperatur, filtrierte den Niederschlag ab und heizte bis 100°C/20 mbar aus. Das Produkt fiel als farblose Flüssigkeit an.
Ausbeute: 71,5 g entsprechend 94,4 % d.Th.
Molmasse: 760 g/mol
Viskosität η_{(23°C)} = 240 mPas (25°C); Dichte ρ_{(23°C)} = 0.960 g/cm³

### Beispiel 9:

### Synthese von cyclo-{SiOMe[(CH₂)₂SiMe₂(OMe)]}₄

In einem 1 Liter Kolben, ausgestattet mit einem Rührer und einem Rückflusskühler, wurden 100 g cyclo-{SiOMe[(CH₂)₂SiMe₂Cl]}₄, hergestellt gemäß Beispiel 6, und 200 g tert.-Butylmethylether eingefüllt. Unter Rühren wurden über einen Zeitraum von einer Stunde 25 Minuten 40 g Methanol zudosiert. Nach beendeter Zugabe wurde die Mischung noch weitere 30 Minuten bei 40°C und einem Druck von 250 mbar gerührt.

Die Mischung wurde auf Raumtemperatur gekühlt. Unter Normaldruck wurde anschließend soviel NH₃ eingeleitet, dass sich ein alkalischer pH-Wert einstellte. Das ausgefallene NH₄Cl wurde abfiltriert und die verbleibende Lösung unter reduziertem Druck bis zu einer Temperatur von 80°C destilliert.

Das Produkt fiel als farblose Flüssigkeit mit einer Viskosität von 48 mPa.s an.
Ausbeute: 92 g
C₂₄H₆₄Si₈O₈
M=704 g/mol
¹H-NMR (CDCl₃)
δ=0,09 ppm (s, 9H, OSiCH₃-CH₂CH₂Si(CH₃)₂(OCH₃)); δ=0,42 ppm (m, 4H, OSiCH₃-CH₂CH₂Si(CH₃)₂(OCH₃)); δ=3,4 ppm (m, 3H, OSiCH₃-CH₂CH₂Si(CH₃)₂(OCH₃)).

### Beispiel 10:

### Herstellung eines organisch-anorganischen Hybridmaterials mit cyclo-{SiOMe[(CH₂)₂Si(OMe)(CH₃)₂]}₄ und dessen Verwendung als Beschichtung.

4,25 g (6,02 mmol) cyclo-{SiOMe[(CH₂)₂Si(OMe)Me₂]}₄, 7,5 g (8,1 ml; 36,1 mmol) Tetraethylorthosilicat, 10 ml Ethanol, 1,5 g Wasser und 0,1 N HCl wurden zusammengegeben und mindestens 20 Stunden gerührt. Die danach erhaltene transparente, farblose Beschichtungslösung wurde mittels eines Filmziehrahmens (mit Schichtdicke im nassen Zustand von 120 µm) aufgetragen. Nach einer 10minütigen Trockenzeit bei Raumtemperatur erfolgte die Aushärtung der Beschichtung durch 15minütige Lagerung bei 160°C. Nach dem Abkühlen auf Raumtemperatur erhielt man eine transparente, homogene und rissfreie Beschichtung.

## Patentansprüche

1. Verfahren zur Herstellung von multifunktionellen, cyclischen Organosiloxanen der Formel (Ia), 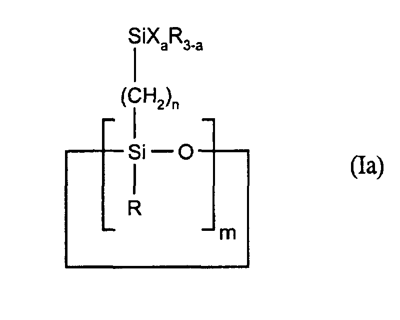 mit m=3-6, a =1-3, n=2-10, R= C₁-C₈-Alkyl und/oder C₆-C₁₄-Aryl, wobei a, n und R innerhalb des Moleküls gleich oder ungleich sein können und wobei die weiteren Reste die folgende Bedeutung haben:
A) für X = Halogen, OR' und R' die Bedeutung von C₁-C₈-Alkyl hat,
**dadurch gekennzeichnet, dass** cyclische Organosiloxane der Formel (II) 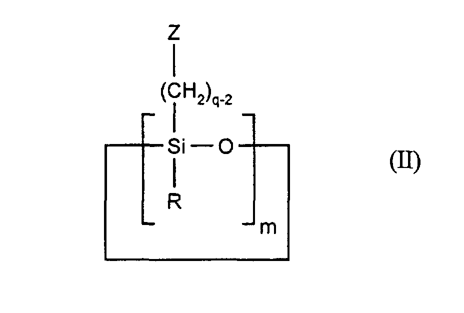 mit m=3-6, R= C₁-C₈-Alkyl und/oder C₆-C₁₄-Aryl, wobei R innerhalb des Moleküls gleich oder ungleich sein kann und wobei die weiteren Reste die folgende Bedeutung haben:
A) Z = C₂H₃ und q = 2-10
mit Hydridosilanen der Formel (III)
HSiT_{f}R_{3-f} (III)
mit a=1-3, T=Halogen, OR und R=C₁-C₈-Alkyl und/oder C₆-C₁₄-Aryl,
in Gegenwart von heterogenen Katalysatoren umgesetzt werden.

2. Verfahren nach Anspruch 1, **dadurch gekennzeichnet, dass** als cyclisches Organosiloxan Cyclo(tetra(methylvinylsiloxan) und als Hydridosilane HSiCl₃, HSiCl₂Me oder HSiClMe₂ eingesetzt werden .

3. Verfahren zur Herstellung von multifunktionellen, cyclischen Organosiloxanen der Formel (Ib), 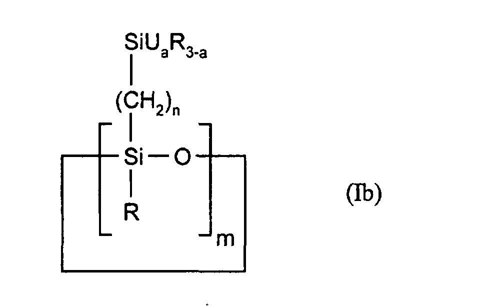 mit m = 3-6, a = 1-3, n = 2-10, R = C₁-C₈-Alkyl und/oder C₆-C₁₄-Aryl, wobei a, n und R innerhalb des Moleküls gleich oder ungleich,sein können und wobei die weiteren Reste die folgende Bedeutung haben:
A) für U = OR' mit R'= C₁-C₈-Alkyl
**dadurch gekennzeichnet, daß** cyclische Organosiloxane der Formel (II) 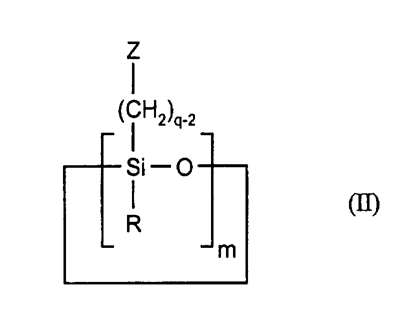 mit m = 3-6, R = C₁-C₈-Alkyl und/oder C₆-C₁₄-Aryl, wobei R innerhalb des Moleküls gleich oder ungleich sein kann und wobei die weiteren Reste die folgende Bedeutung haben:
A) Z = C₂H₃ mit q=2-10
mit Hydridosilanen der Formel (III)
HSiT_{f}R_{3-f} (III)
mit f=1-3, T=Halogen,
in Gegenwart von heterogenen Katalysatoren umgesetzt und anschließend mit oder einem Alkohol umgesetzt werden.

4. Verfahren nach einem der Ansprüche 1 bis 3, **dadurch gekennzeichnet, dass** als heterogener Katalysator Platin oder eine Platin-Verbindung als katalytisch aktiver Bestandteil und als Trägermaterial Kohlenstoff eingesetzt wird.

5. Verfahren nach einem der Ansprüche 1 bis 4, **dadurch gekennzeichnet, dass** als heterogener Katalysator Hexachloroplatinsäure auf Aktivkohle eingesetzt wird.

6. Verfahren gemäß einem der Ansprüche 1 bis 5, **dadurch gekennzeichnet, dass** die Umsetzung diskontinuierlich in einem Lösungsmittel erfolgt.
